# EUROPÄISCHE PATENTSCHRIFT

(11) **EP 2 241 202 B1**
(45) Veröffentlichungstag und Bekanntmachung des Hinweises auf die Patenterteilung: **27.02.2013**
(21) Anmeldenummer: 09100236.0
(22) Anmeldetag: 15.04.2009
(51) Int. Cl.: A23L 3/36, A23L 3/375, F25D 3/11

(54) **Vorrichtung und Verfahren zum Kühlen oder Frosten langgestreckter Produkte**
Device and method for cooling or freezing elongated products
Dispositif et procédé de refroidissement ou de gel de produits allongés

(43) Veröffentlichungstag der Anmeldung: 20.10.2010
(73) Patentinhaber: Messer Group GmbH, 65812 Bad Soden (DE); Messer France S.A.S., 92816 Puteaux Cedex (FR)
(72) Erfinder: Beauge, Claude, 95610, Eragny sur Oise (FR); Gockel, Frank, 77410, Charny (FR)
(74) Vertreter: Münzel, Joachim R.

(56) Entgegenhaltungen:
- EP-A1- 1 528 340
- JP-A- 11 164 653
- US-A- 3 871 190
- US-A- 3 898 863
- US-A- 4 103 507
- US-A- 4 757 691
- US-A- 5 478 584
- US-A1- 2001 013 227
- US-B1- 6 167 708
- US-B1- 6 622 513

## Beschreibung

Die Erfindung betrifft eine Vorrichtung sowie ein Verfahren zum Kühlen oder Frosten langgestreckter Produkte.

Insbesondere in der Lebensmittelindustrie ist es erforderlich, Produkte nach ihrer Herstellung, vor oder während der Weiterverarbeitung oder vor dem Verpacken zu kühlen oder zu frosten. Das Schockfrosten industriell gefertigter Tiefkühlprodukte verhindert das aroma- und qualitätsmindernde Austreten von Zellwasser nach dem Auftauen. In Anlagen zur kryogenen Frostung wirken verflüssigte Gase, wie Flüssigstickstoff (LIN) oder Flüssigkohlendioxid (LCO₂), unmittelbar im direkten Kontakt mit dem Gefriergut. In einem klassischen Linearfroster, wie er beispielsweise aus der DE 10 2004 020 180 A1 bekannt ist, werden die zu kühlenden oder zu frostenden Produkte auf einem Band mit einer Geschwindigkeit von 1 bis 10 m/min durch einen Kühltunnel gefördert. Mittels in Laufrichtung hintereinander angeordneter Düsen oder Sprührohre wird verflüssigtes Gas auf die Produkte aufgesprüht. Das flüssige Gas verdampft und wird als Kaltgas mittels Ventilatoren weiter durch den Linearfroster geleitet, wobei es den Produkten auf konvektivem Wege weitere Wärme entzieht und sich dabei erwärmt. Das erwärmte Gas wird schließlich einer Gasabsaugung zugeführt und in die Umgebungsatmosphäre abgegeben.

Für spezielle Anwendungen erfolgt die Kühlung bzw. Frostung der Lebensmittel nicht durch Besprühen, sondern durch Eintauchen direkt in das tiefkalte verflüssigte Gas. Eine Behandlung von Produkten dieser Art ist beispielsweise in der EP 0 919 279 B1 beschrieben. Die hierbei eingesetzten Geräte, im Folgenden als Prozessfroster bezeichnet, enthalten z. B. Tauchbäder, Rüttelrinnen, saugfähige Transportbänder oder Plattenbänder, in oder auf denen die Kältebehandlung der Produkte stattfindet. Das bei einer derartigen Anwendung durch Verdampfen von flüssigem Gas entstehende Kaltgas gelangt entweder als Abgas direkt in die Absaugung oder es wird durch Überleitrohre in einen nachfolgenden Froster geführt, wo es zur Kühlung verwendet wird. Stand der Technik ist auch, im Prozessfroster entstehendes Kaltgas mit einem Förderventilator aus dem Prozessfroster abzuziehen und in einen sich direkt anschließenden zweiten Froster zu fördern.

Aus den Druckschriften US 6 167 708 B1, US 3 871 190 und EP 1 528 340 A1 sind weitere Beispiele für Tunnelfroster zum Kühlen von Produkten bekannt, bei denen das zu kühlende Produkt mittels eines Transportbandes entlang einer Kühlebene durch einen Kühltunnel geführt wird. Demzufolge wird das Kältemittel aus Düsen auf die Produkte eingesprüht, die jeweils oberhalb und/oder unterhalb der Kühlebene angeordnet sind. Die ebene Geometrie des zu kühlenden Bereiches bedingt jedoch eine Zuführung des Kühlmittels parallel zur Kühlebene, da nur auf diese Weise alle auf dem Transportband geförderten Produkte gleichermaßen mit Kühlmittel beaufschlagt werden.

Die bislang angebotenen Lösungen führen für Fertigprodukte wie auch für stückige Produkte zu guten Ergebnissen. Beim Kühlen oder Frosten von langgestreckten Produkten, insbesondere stangen-, seil-, strang- oder schlauchförmigen Produkten oder solchen Produkten, die in Endlosform produziert und die, als Vorbehandlung für eine Zerschneidung in Stücke vorgegebener Länge, gekühlt werden müssen, sind diese Lösungen nur bedingt geeignet. Aufgrund der langgestreckten Geometrie ist nämlich das Verhältnis aus Oberfläche zu Volumen im Vergleich zu stückigen Produkten klein. Der Wärmetausch zwischen dem als Kältemittel eingesetztem tiefkalten oder verflüssigten Gas und dem Produkt erfolgt lediglich über die schlauchförmige Oberfläche des Produkts in radialer Richtung, im Gegensatz zu stückigen Produkten, bei denen ein Kühlung von allen Seiten möglich ist. Beim Kühlen in Linearfrostern führt dies zu der Notwendigkeit, entweder die Gefriergeschwindigkeit, mit der das Produkt den Tunnel durchquert, deutlich zu reduzieren, oder den Tunnel für diesen speziellen Anwendungszweck deutlich zu verlängern, mit der Konsequenz erhöhter Investitions- und Betriebsstoffkosten. Beide Alternativen führen zu betriebswirtschaftlich unbefriedigenden Resultaten. Die Kühlung durch Eintauchen in ein Bad aus verflüssigtem Gas ist hier keine Alternative, da bei einer schlechten Wärmeleitung, wie sie bei den meisten Lebensmitteln zu erwarten ist, im Produkt ein großer Temperaturgradient aufgebaut wird. Während im Kern des Produkts die angestrebte Temperatur gerade erreicht wird, ist die Temperatur der Produktoberfläche bereits so niedrig, dass die Oberfläche hart und spröde wird. Wird das Produkt beim anschließenden Transport einer gebogenen Zwangsführung unterworfen, kommt es selbst bei großen Kurvenradien zu Rissen in der Oberfläche. Um eine hinreichende Elastizität der Produktoberfläche aufrecht zu erhalten und dennoch eine brauchbare Durchfrostung zu gewährleisten, muss die Verweildauer im Stickstoffbad sekundengenau abgestimmt werden. Es besteht damit eine hohe Anfälligkeit des Systems gegenüber Störungen im Betriebsablauf. Zudem ist es nicht in der Regel nicht möglich, verschiedene Produkte mit unterschiedlichen Durchmessern auf der gleichen Produktlinie zu behandeln. Eine mehrstufige Behandlung, bei der das Produkt während des Transports mehrere hintereinander aufgestellte Tauchbäder durchläuft, könnte zwar das Problem der unzureichenden Durchfrostung technisch lösen, scheitert an den hohen hierzu erforderlichen Investitionskosten.

Aufgabe der vorliegenden Erfindung ist daher, eine Einrichtung zum Kühlen oder Frosten von Lebensmittelprodukten zu schaffen, die die Nachteile des Standes der Technik beim Kühlen oder Frosten von langgestreckten Produkten vermeidet.

Gelöst ist diese Aufgabe durch eine Vorrichtung mit den Merkmalen des Patentanspruchs 1 sowie durch ein Verfahren mit den Merkmalen des Patentanspruchs 11.

Die erfindungsgemäße Vorrichtung zum Kühlen oder Frosten langgestreckter Produkte ist mit einem rohrförmigem Kühltunnel ausgerüstet, der beim Einsatz der Vorrichtung vom Produkt in Längsrichtung durchlaufen wird und in dem - in Laufrichtung des Produkts gesehen - hintereinander eine Injektionsdüse und ein rohrförmiger Nachkühlabschnitt angeordnet sind, wobei die Injektionsdüse so ausgebildet ist, dass das Produkt über zumindest annähernd seinem gesamten Außenumfang mit einem kryogenen Kältemittel beaufschlagbar ist, und im Nachkühlabschnitt beim Betrieb der Vorrichtung eine zumindest überwiegend aus kaltem kryogenem Kältemittel bestehende Atmosphäre aufrechterhalten wird, wobei die Injektionsdüse einen sich zumindest über einen wesentlichen Teil des Innenumfangs erstreckenden Ringspalt umfasst.

Gemäß der Erfindung wird also das langgestreckte Produkt beim Durchlaufen des Kühltunnels an der Injektionsdüse über zumindest annähernd seinen gesamten Außenumfang direkt mit dem kryogenen Kältemittel, also beispielsweise mit verflüssigtem oder kalten gasförmigem Stickstoff, Sauerstoff oder Kohlendioxid oder ein kaltes Edelgas, in Kontakt gebracht. Dadurch erfolgt eine rasche und gleichmäßige Kühlung der Oberfläche. Nach einer verhältnismäßig kurzen direkten Beaufschlagung mit Kältemittel gelangt das Produkt anschließend in den Nachkühlabschnitt. Die Atmosphäre im Nachkühlabschnitt besteht bevorzugt im Wesentlichen aus kaltem, gasförmigem Kältemittel, das beispielsweise zuvor im verflüssigten Zustand an der Injektionsdüse auf das Produkt aufgesprüht wurde, anschließend mit dem Produkt zusammen in den Nachkühlabschnitt gelangt und dort verdampft ist. In der Atmosphäre des Nachkühlabschnitts, die kalt, jedoch nicht so kalt wie das an der Injektionsdüse direkt auf das Produkt aufgetragene Kältemittel ist, kann das Produkt gleichmäßig durchkühlen. Gleichzeitig bewahrt die Produktoberfläche eine gewisse Restelastizität. Das Produkt durchläuft den Kühltunnel frei hängend oder es wird über geeignete Elemente, beispielsweise Schienen, zumindest abschnittsweise geführt oder es stützt sich beim Transport direkt von der Wand des Kühltunnels ab. Der Durchmesser des Kühltunnels ist dem Außenumfang und gegebenenfalls dem Querschnitt des Produkts angepasst und lässt nur einen vergleichsweise geringen lichten Abstand zwischen Produktoberfläche und Innenoberfläche des Kühltunnels offen. Bevorzugt besteht zwischen Produktoberfläche und Innenwand an den engsten Stellen des Kühltunnels eine lichte Weite von nicht mehr als zwischen 0,5 cm bis 3 cm, besonders bevorzugt 0,5 bis 1 cm, sofern das Produkt nicht auf der Innenoberfläche aufliegt.

Die Injektionsdüse umfasst einen sich zumindest über einen wesentlichen Teil des Innenumfangs erstreckenden Ringspalt. Das kryogene Kältemittel wird so gleichmäßig in einer senkrecht zur Transportrichtung des Produkts verlaufenden Ebene auf das Produkt aufgetragen.

In einer anderen vorteilhaften Ausgestaltung umfasst die Injektionsdüse eine Mehrzahl von in gleichen Winkelabständen um den Innenumfang des Kühltunnels angeordneten Düsenöffnungen. Auch in diesem Fall findet eine sehr gleichmäßige Beaufschlagung des Produkts statt.

Zweckmäßigerweise ist der Strömungsquerschnitt der Injektionsdüse, also insbesondere die Breite des Ringspalts oder die Anzahl oder der Durchmesser der einzelnen Injektionsdüsen, veränderbar ausgestaltet, um die Menge des zuzuführenden Kältemittels den jeweiligen Anforderungen an die Kühltemperatur, an die Wärmekapazität des Produkts oder sonstiger Parameter anzupassen. Unabhängig davon oder ergänzend dazu ist es im Rahmen der Erfindung auch denkbar, die Kühlmittelmenge durch ein Ventil im Bereich einer der Injektionsdüse zugeordneten Kältemittelzuleitung oder durch eine Variation des Drucks in der Kältemittelzuleitung einzustellen und/oder zu regeln. In den zuletzt genannten Fällen kann der Strömungsquerschnitt der Injektionsdüse auch konstant gehalten werden.

Eine vorteilhafte Weiterbildung der Erfindung sieht vor, dass - in Laufrichtung des Produkts gesehen - vor der Injektionsdüse ein Vorkühlabschnitt vorgesehen ist, in den zwecks Vorkühlung des Produkts ein Kältemittel zuführbar ist. Bei dieser Ausgestaltung wird das Produkt bereits vor Erreichen der Injektionsdüse durch eine Kühlatmosphäre geführt, um insgesamt eine möglichst schonende Kühlung des Produkts zu bewirken.

In einer besonders bevorzugten Ausgestaltung der Erfindung steht der Nachkühlabschnitt mit dem Vorkühlabschnitt über eine Gasleitung in Strömungsverbindung, um Kältemittel aus dem Nachkühlabschnitt in den Vorkühlabschnitt einzuleiten. Diese Ausgestaltung ist insbesondere dann von Vorteil, wenn die kalte Atmosphäre im Nachkühlabschnitt durch das laufend über die Injektionsdüse zugeführte und im Kontakt mit dem Produkt erwärmte Kältemittel erzeugt wird. Dieses Kältemittel wird anschließend nicht in die Umgebung abgegeben, sondern einer weiteren Verwendung im Vorkühlabschnitt zugeführt. Somit kann das Kältemittel besonders effizient eingesetzt werden.

Vorteilhafterweise ist eine auf den Produkteingang des Kühltunnels gerichtete Vorkühldüse vorgesehen, um gasförmiges, kryogenes Kältemittel bereits vor dem Produkteingang des Kühltunnels bzw. des Vorkühlabschnitts auf das Produkt zu leiten, um dieses vorzukühlen. Diese Kühldüse kann auch anstelle des zuvor erwähnten Vorkühlabschnitts vorgesehen sein oder innerhalb des Vorkühlabschnitts können eine oder mehrerer solcher Düsen vorhanden sein. Auch diese Ausgestaltung trägt in zweckmäßiger Weise zu einer effizienten Vorkühlung des Produkts bei.

Zweckmäßigerweise ist die Vorrichtung so ausgestaltet, dass die Längsachse des Kühltunnels senkrecht, waagerecht oder in einem Winkel zur Senkrechten geneigt angeordnet ist. Unter anderem hängt die Wahl der Geometrie von den Platzmöglichkeiten in der Betriebsstätte oder von den Eigenschaften des Produkts ab. Beispielsweise empfiehlt sich für brüchige oder teigartige Produkte oder Produkte in Form eines flüssigen oder pastösen Strahls eine senkrechte oder nahezu senkrechte Anordnung des Kühltunnels, den das Produkt bei der Kühlung von oben nach unten durchläuft.

In einer abermals bevorzugten Ausführungsform der Erfindung ist ein modularer Aufbau der Vorrichtung vorgesehen, die den Aufbau und die Wartung der Vorrichtung erleichtert und die Flexibilität in Bezug auf unterschiedliche Produkte erhöht. Dabei sind Vorkühlabschnitt, Injektionsdüse und/oder Nachkühlabschnitt lösbar miteinander verbunden und können somit leicht ab- und anmontiert bzw. ausgetauscht werden. Auch können Vorkühlabschnitt und Nachkühlabschnitt selbst wieder aus einzelnen modularen Teilen zusammengesetzt sein, um die Länge der Abschnitte den Erfordernissen entsprechend anzupassen. Beispielsweise ist es sinnvoll, für schlecht wärmeleitende Produkte einen längerer Vorkühlabschnitt und/oder einen längeren Nachkühlabschnitt vorzusehen als für Produkte mit guter Wärmeleitung.

Bevorzugt umfasst der Kühltunnel eine Abfolge von mehreren Injektionsdüsen mit sich daran anschließenden Nachkühlabschnitten, die - in Durchlaufrichtung des Produkts gesehen - entweder unmittelbar aufeinander folgend oder räumlich voneinander getrennt angeordnet sind. Dadurch kann die Kühlung sehr schonend in mehreren aufeinander abfolgenden Schritten vorgenommen werden.

Die Aufgabe der Erfindung wird auch durch ein Verfahren zum Kühlen oder Frosten langgestreckter Produkte gelöst, bei dem das Produkt in Längsrichtung kontinuierlich durch einen rohrförmigen Kühltunnel transportiert und dabei an einer Injektionsdüse, die einen sich zumindest über einen wesentlichen Teil des Innenumfangs des Kühltunnels erstreckenden Ringspalt umfasst, über zumindest annähernd seinen gesamten Außenumfang mit einem kryogenen Kältemittel beaufschlagt und anschließend in einem Nachkühlabschnitt des Kühltunnels durch eine Atmosphäre geführt wird, deren Temperatur über der Temperatur des kryogenen Kältemittels bei der Beaufschlagung an der Injektionsdüse liegt.

Gemäß dem erfindungsgemäßen Verfahren findet also eine zweistufige Behandlung des Produkts statt. An der Injektionsdüse wird das kontinuierlich den Kühltunnel durchlaufende Produkt mit einem kalten kryogenen Kältemittel beaufschlagt. Die effektive Dauer der Beaufschlagung richtet sich dabei nach der Geschwindigkeit, mit der das Produkt den Kühltunnel durchläuft und nach der Geometrie der Injektionsdüse. In der Regel bleibt die Dauer der direkten Einwirkung des Kältemittels auf einen Punkt der Produktoberfläche unter einer Sekunde. Im Anschluss an die Injektionsdüse gelangt das Produkt in den Nachkühlabschnitt, in dem eine kalte Atmosphäre herrscht, die jedoch aufgrund des Kontakts mit dem Produkt eine höhere Temperatur aufweist als im Bereich der Injektionsdüse. Das Produkt durchläuft den Nachkühlabschnitt und ist darin für eine Dauer, die je nach zu kühlendem Produkt einige Sekunden oder Minuten dauern kann und jedenfalls die Dauer der direkten Beaufschlagung mit Kältemittel an der Injektionsdüse erheblich übersteigt, einer kühlen Atmosphäre ausgesetzt. Während dieser Zeit findet ein Temperaturausgleich im Innern des Produkts statt. Da die Temperatur der Atmosphäre im Nachkühlabschnitt höher ist als die Temperatur des aus der Injektionsdüse tretenden Kältemittels wird die Oberfläche des Produkts nicht weiter abgekühlt. Im Unterschied zu Kühlverfahren nach dem Stande der Technik kann so eine effiziente und schnelle Kühlung des Produkts bewirkt und gleichzeitig der Produktoberfläche eine gewisse Elastizität bewahrt werden.

Um die Effizienz des erfindungsgemäßen Verfahrens weiter zu erhöhen, durchläuft das Produkt vor Erreichen der Injektionsdüse bevorzugt einen Vorkühlabschnitt, in dem zwecks Vorkühlung des Produkts eine kalte gasförmige Atmosphäre aufrecht erhalten wird.

Eine besonders bevorzugte Ausführungsform der Erfindung sieht vor, dass das kryogene Kältemittel an der Injektionsdüse in verflüssigtem Zustand auf das Produkt aufgesprüht wird und beim Transport durch den Nachkühlabschnitt durch Kontakt mit dem Produkt zumindest im Wesentlichen verdampft und dadurch eine kalte Atmosphäre im Nachkühlabschnitt ausbildet.

Eine abermals vorteilhafte Variante der Erfindung besteht darin, dass das im Nachkühlabschnitt verdampfte Kältemittel zumindest teilweise zum Vorkühlabschnitt geleitet und dort zum Vorkühlen des Produkts eingesetzt wird. Dadurch wird der Kälteinhalt des Kältemittels besonders effektiv genutzt.

Als kryogenes Kältemittel eignet sich besonders gut ein verflüssigtes oder tiefkaltes gasförmiges kryogenes Medium. Beispiele hierfür sind: Stickstoff, Sauerstoff, Argon oder Kohlendioxid. Dieses Medien werden beispielsweise als kaltes Gas oder verflüssigt über die Injektionsdüse eingesprüht. Kohlendioxid kann unter Druck verflüssigt mit einer beispielsweise der Umgebungstemperatur entsprechenden Temperatur herangeführt werden und wird beim Sprühen auf das Produkt unter starker Abkühlung und Entstehung von Kohlendioxidschnee und kaltem Kohlendioxidgas entspannt.

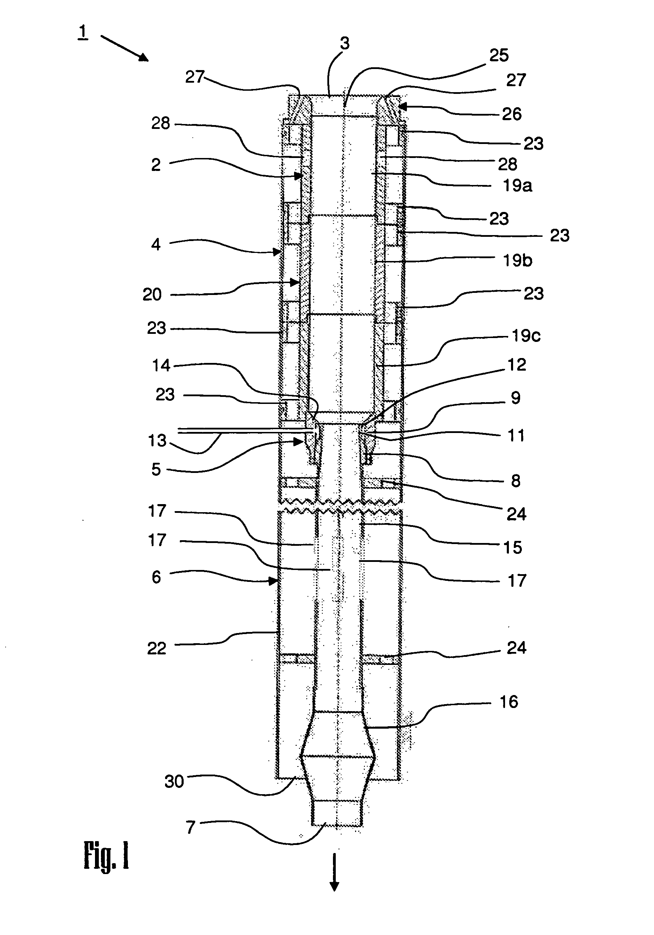

Anhand der Zeichnung soll ein Ausführungsbeispiel der Erfindung näher erläutert werden. Die einzige Zeichnung (Fig. 1) zeigt eine erfindungsgemäße Vorrichtung im Längsschnitt.

Die Vorrichtung 1 dient zum Kühlen oder Frosten langgestreckter Produkte, wie beispielsweise Surimi, das in Endlosform produziert und vor dem Zerschneiden in Portionen schockgefrostet wird. Die Vorrichtung 1 umfasst einen langgestreckten, ungefähr rohrförmigen Kühltunnel 2 mit einem Produkteingang 3 und ist funktional in einen Vorkühlabschnitt 4 und einen Nachkühlabschnitt 6 unterteilt, zwischen denen eine Ringdüse 5 angeordnet ist. Das gekühlte Produkt tritt an einem Produktausgang 7 aus dem Kühltunnel 2 aus.

Als zentrales Element zur Kühlung der Produkte weist die zweiteilig aufgebaute Ringdüse 5 einen Innenabschnitt 8 und einen diesen radial außenseitig umschließenden Außenabschnitt 9 auf. Der Innenabschnitt 8 der Ringdüse 5 ist an seiner engsten Stelle mit seinem Innendurchmesser dem Außendurchmesser und gegebenenfalls auch der Querschnittsform eines zu kühlenden Produkts derart angepasst, dass zwischen Produktoberfläche und Innenoberfläche des Kühlkanals 15 ein nur geringer lichter Abstand von maximal einigen Millimetern bis zu einem Zentimeter besteht. In Richtung auf den Produktausgang 7 weitet sich der Innenquerschnitt des Innenabschnitts 8 leicht konisch auf. Der Innenabschnitt 8 weist einen Kältemittelverteiler 11 in Form einer rundum laufenden Nut auf, die radial außenseitig vom Außenabschnitt 9 der Ringdüse 5 begrenzt wird. Der Kältemittelverteiler 11 steht mit einem Ringspalt 12 in Strömungsverbindung, der sich zwischen der produkteingangsseitigen Stirnseite des Innenabschnitts 8 und einem innenseitig vorstehenden Vorderabschnitt 14 des Außenabschnitts 9 öffnet. Ein Kältemittel, das aus einer Kältemittelzuleitung 13 dem Kältemittelverteiler 11 zugeführt wird, verteilt sich im Kältemittelverteiler 11 und strömt gleichmäßig über den gesamten Umfang des Ringspalts 12 in überwiegend zentraler Richtung in das Innere des Kühltunnels 2 ein. Um die Breite des Ringspalts 12, d.h. der Abstand zwischen der Stirnseite des Innenabschnitts 8 und dem Vorderabschnitt 14, variieren zu können, ist der Außenabschnitt 9 in axialer Richtung bewegbar am Innenabschnitt 8 angeordnet. Beispielsweise ist der Außenabschnitt 9 auf dem Innenabschnitt 8 aufgeschraubt, und die Breite des Ringspalts 12 lässt sich durch eine entsprechende Drehung des Außenabschnitts 9 gegenüber dem Innenabschnitt 8 stufenlos in einem weiten Bereich von beispielsweise 0 bis 5 mm einstellen.

Der Innenabschnitt 8 der Ringdüse 5 ist auf seiner dem Produktausgang 7 zugewandten Seite mit einem Kühlkanal 15 verbunden, der zugleich den Teil des Kühltunnels 2 im Bereich des Nachkühlabschnitts 6 bildet. Der Kühlkanal 15 kann - wie auch der Nachkühlabschnitt 6 - eine Länge von ca. 50 cm bis zu einigen Metern aufweisen und weist einen Innenquerschnitt auf, dessen lichte Weite geringfügig größer ist als die des Innenquerschnitts des Ringspalts 5 an dessen engster Stelle. Im Bereich des Produktausgangs ist der Kühlkanal 15 mit einer Aufweitung 16 versehen; weiterhin weist der Kühlkanal 15 in seinen Wandungen eine Anzahl von Öffnungen 17 auf, die im Ausführungsbeispiel schlitzförmig ausgebildet und parallel zur Längsachse des Kühltunnels 2 angeordnet sind, jedoch auch andere Geometrien, wie beispielsweise kreisförmig oder oval, aufweisen oder winklig zur Längsachse des Kühltunnels 2 verlaufen können. Zweckmäßigerweise ist der Kühlkanal 15 lösbar mit den übrigen Komponenten der Vorrichtung 1 verbunden und kann bei Bedarf, etwa bei Wechsel des zu kühlenden Produkts, durch einem anderen Kühlkanal ersetzt werden.

Der im Ausführungsbeispiel aus drei fest, aber lösbar miteinander verbundenen modularen Teile 19a, 19b, 19c zusammengesetzte Vorkühlabschnitt 4 umfasst einen Kühlkanal 20, der sich an den Außenabschnitt 9 der Ringdüse 5 in Richtung des Produkteingangs 2 anschließt. Der Innendurchmesser des Kühlkanals 20 ist größer als der Innendurchmesser des Kühlkanals 15 und auch größer als der minimale Innendurchmesser der Ringdüse 5, wobei eine konische Zuformung des Vorderabschnitts 14 der Ringdüse 5 den Übergang zwischen den verschieden großen Innendurchmessern von Kühlkanal 20 und Ringdüse 5 vermittelt. Da sich zugleich der Innenquerschnitt des Innenabschnitts 8 in Richtung zum Produktausgang 7 konisch aufweitet, ist die Ringdüse 5 insgesamt nach Art einer Venturidüse aufgebaut, dessen engste Stelle sich im Bereich des Ringspalts 12 befindet. Das der Ringdüse 5 nächstliegende Teil 19c des Vorkühlabschnitts 4 ist fest, aber lösbar mit dem Außenabschnitt 9 der Ringdüse 5 verbunden.

Radial beabstandet von den Kühlkanälen 15, 20 ist ein mit einer thermischen Isolierung versehener Außenmantel 22 angeordnet. Der Außenmantel 22 ist entsprechend dem modularen Aufbau der Vorrichtung 1 in voneinander trennbare Abschnitte unterteilt. Im Bereich des Vorkühlabschnitts 4 umfasst der Außenmantel 22 jeweils radial außenseitig an Flanschen 23 der modularen Teile 19a, 19b, 19c befestigte Abschnitte. Im Bereich der Ringdüse 5 und des Nachkühlabschnitts 6 wird ein rohrförmiger Abschnitt des Außenmantels 22 mit Abstandshaltern 24 auf radialen Abstand vom Kühlkanal 15 gehalten. Sowohl in den Abstandshaltern 24 als auch in den Flanschen 23 sind Bohrungen als Strömungsdurchlässe angeordnet, sodass alle zwischen Außenmantel 22 und Kühlkanälen 15, 20 befindlichen Hohlräume miteinander strömungsverbunden sind. Auf den zum Produkteingang 3 zugewandten Ende des an vordersten modularen Teils 19a ist ein Produkteinlaufteil 26 montiert, durch das mehrere in gleichen Winkelabständen angeordnete und auf die Längsachse 25 des Kühltunnels 2 im Bereich vor dem Produkteingang 3 gerichtete Strömungskanäle 27 geführt sind. Weiterhin besitzt das modularen Teils 19a zum Innern des Kühlkanals 20 hin mehrere ebenfalls in gleichmäßigen Winkelabständen angeordnete Durchführungen 28, die eine Strömungsverbindung zwischen dem Innenraum des Kühlkanals 20 und dem zwischen Außenmantel 22 und Innenraum des modularen Teils 19a gelegenen Ringraum 29 herstellen.

Beim Betrieb der Vorrichtung 1 wird ein langgestrecktes, beispielsweise stangen-, strang- oder schlauchförmiges Produkt entlang der Längsachse 25 des Kühltunnels 2 vom Produkteingang 3 zum Produktausgang 7 transportiert. Das Produkt auf hier nicht gezeigten Bändern zur Vorrichtung 1 hin bzw. von der Vorrichtung 1 weg geführt. Im Innern der Vorrichtung 1 stützt es sich, soweit erforderlich, von den Innenwänden der Kühlkanäle 15, 20 ab, oder wird über hier nicht gezeigte Schienen geleitet. Insbesondere bei einer senkrechten Anordnung der Vorrichtung 1 bedarf das Produkt keiner mechanischen Stützung im Innern des Kühltunnels 2.

Durch den Ringspalt 12 der Ringdüse 5 wird ein über die Kältemittelzuleitung 13 herangeführtes Kältemittel auf das Produkt aufgetragen. Dabei wird zumindest weitgehend der gesamte Außenumfang des Produkts gleichzeitig mit Kältemittel beaufschlagt und somit die Produktoberfläche stark gekühlt. Die Ausbildung der Ringdüse 5 als Venturidüse unterstützt dabei die Zufuhr des Kältemittels. Beim Kontakt mit dem Produkt erwärmt sich das Kältemittel, im Falle eines verflüssigten kryogenen Kältemittels, wie etwas flüssiger Stickstoff, verdampft es. Bei Einsatz von Kohlendioxid als Kältemittel wird das Kohlendioxid bevorzugt unter Druck im verflüssigten Zustand zugeführt und entspannt beim Austritt aus der Ringdüse 5 unter starker Abkühlung. Dabei entsteht neben kaltem Kohlendioxidgas auch Kohlendioxidschnee, der bis zu seiner völligen Sublimation teilweise am Produkt anhaftet. Das sich erwärmende und/oder verdampfende und/oder sublimierende Kältemittel dehnt sich aus und führt im Innern der Kühlkanäle 15, 20 zu einem Überdruck, der das Eindringen von feuchter Umgebungsluft wirksam verhindert. Der Vortrieb des Produkts durch den Kühltunnel 2 führt dazu, dass etwaig noch am Produkt anhaftendes flüssiges oder festes Kältemittel erst hinter der Ringdüse 12, also im Innern des Kühlkanals 15 verdampft. Das erwärmte gasförmige Kältemittel dringt durch die Öffnungen 17 des Kühlkanals 15 in alle Bereiche des Ringraums zwischen Außenmantel 22 und Kühlkanälen 15, 20 ein. Die die lichte Weite des Ringraums zwischen Außenmantel 22 und Kühlkanal 15 mindernde Aufweitung 16 lenkt zusätzlich einen Teil des Kältemittels in die vorderen, zwischen Außenmantel 22 und Kühlkanal 20 gelegenen Ringräume. Über die Durchführungen 28 im modularen Teil 19a gelangt ein Teil des Kältemittels in den Innenraum des Kühlkanals 20, ein anderer Teil tritt über die Strömungskanäle 27 aus und sorgt so für eine Vorkühlung des am Produkteingang 3 in den Kühlkanal 2 geführten Produkts. Der größere Teil des in den Ringraum zwischen Außenmantel 22 und Kühlkanal 15 einströmenden Kältemittels strömt jedoch an der Aufweitung 16 vorbei durch eine rückwärtige Öffnung 30 ab.

Beim Durchgang des Produkts durch den Kühlkanal 15 des Nachkühlabschnitts 6 findet keine direkte Beaufschlagung des Produkts mit zugeführtem Kältemittel statt. In der dort vorherrschenden kühlen Atmosphäre kommt es zu einem Temperaturausgleich im Innern des Produkts, der zu einer homogeneren Temperaturverteilung über den gesamten Produktquerschnitt führt. Gegenüber Kühleinrichtungen nach dem Stande der Technik wird die Oberfläche des Produkts weniger stark abgekühlt und bewahrt so einen Teil ihrer Elastizität. Dadurch ist es möglich, das Produkt in nachfolgenden Verarbeitungsschritten auch über gebogene Förderwege zu führen. Soll ein anderes Produkt gekühlt werden, können Teile der Vorrichtung 1 leicht ausgetauscht und so die Vorrichtung 1 der neuen Produktaufgabe angepasst werden. So kann insbesondere der Kühlkanal 15 durch einen Kühlkanal anderer Länge oder mit einem anderen Innenprofil ausgetauscht werden, um der anderen Geometrie oder der anderen Wärmeleitfähigkeit eines anderen Produkts Rechnung zu tragen. Entsprechendes gilt für die Ringdüse 5, diel gleichfalls ausgetauscht werden kann. Auch kann der Vorkühlabschnitt 4 durch Zufügung oder Entfernung einzelner modularer Abschnitte 19a, 19b, 19c verlängert oder verkürzt werden.

Um eine noch bessere Homogenität der Temperaturverteilung im Produkt und eine insgesamt tiefere Temperatur im Innern des Produkts u erreichen, empfiehlt es sich, mehrere Vorrichtungen 1 hintereinander anzuordnen, die nacheinander vom Produkt durchlaufen werden. Die Produkte werden dann besonders gleichmäßig und behutsam auf eine sehr tiefe Temperatur abgekühlt, ohne dass es zu einer Versprödung der Produktoberfläche kommt. Anstelle mehrerer, räumlich voneinander getrennter Vorrichtungen 1 kommt auch eine einzige Vorrichtung in Betracht, in der mehrere Ringdüsen - in Produktlaufrichtung gesehen - hintereinander angeordnet und jeweils von Nachkühlabschnitten voneinander getrennt sind. In diesem Fall gelangt das Produkt während des gesamten Kühlvorhangs nicht in Kontakt mit der Umgebungsatmosphäre, was insbesondere die Anlagerung von Luftfeuchte verhindert.

Die erfindungsgemäße Vorrichtung ist nicht auf Produkte der Lebensmittelindustrie beschränkt, sondern für alle langgestreckten Produkte geeignet, bei denen eine schonende Abkühlung und eine gleichmäßige Durchkühlung des Produkts erfolgen sollen, wie etwa bei der Kühlung von Metallrohren nach der Fertigung, oder beim Strangpressen zum Herstellen von Stäben, Drähten, Rohren und unregelmäßig geformten prismatischen Profilen.

### Bezugszeichenliste

- 1.: Vorrichtung
- 2.: Kühltunnel
- 3.: Produkteingang
- 4.: Vorkühlabschnitt
- 5.: Ringdüse
- 6.: Nachkühlabschnitt
- 7.: Produktausgang
- 8.: Innenabschnitt (der Ringdüse)
- 9.: Außenabschnitt (der Ringdüse)
- 10.: -
- 11.: Kältemittelverteiler
- 12.: Ringspalt
- 13.: Kältemittelzuleitung
- 14.: Vorderabschnitt
- 15.: Kühlkanal (des Nachkühlabschnitts)
- 16.: Aufweitung
- 17.: Öffnungen
- 18.: -
- 19.: -
- 19a, 19b, 19c: Modulare Teile des Vorkühlabschnitts
- 20.: Kühlkanal (des Vorkühlabschnitts)
- 21.: -
- 22.: Außenmantel
- 23.: Flansch
- 24.: Abstandshalter
- 25.: Längsachse (des Kühltunnels)
- 26.: Produkteinlaufteil
- 27.: Strömungskanal
- 28.: Durchführung
- 29.: -
- 30.: Öffnung

## Patentansprüche

1. Vorrichtung zum Kühlen oder Frosten langgestreckter Produkte, mit einem rohrförmigem Kühltunnel (2), der beim Einsatz der Vorrichtung vom Produkt in Längsrichtung durchlaufen wird und in dem - in Laufrichtung des Produkts gesehen - hintereinander eine Injektionsdüse (5) und ein rohrförmiger Nachkühlabschnitt (6) angeordnet sind, wobei die Injektionsdüse (5) so ausgebildet ist, dass das Produkt über zumindest annähernd seinem gesamten Außenumfang mit einem kryogenen Kältemittel beaufschlagbar ist, und im Nachkühlabschnitt (6) beim Betrieb der Vorrichtung eine zumindest überwiegend aus kaltem kryogenem Kältemittel bestehende Atmosphäre aufrechterhalten wird,
**dadurch gekennzeichnet,**
**dass** die Injektionsdüse (5) einen sich zumindest über einen wesentlichen Teil des Innenumfangs des Kühltunnels (2) erstreckenden Ringspalt (12) umfasst.

2. Vorrichtung nach Anspruch 1, **dadurch gekennzeichnet, dass** die Injektionsdüse (5) eine Mehrzahl von in gleichen Winkelabständen um den Innenumfang des Kühltunnels (2) angeordneten Düsenöffnungen umfasst.

3. Vorrichtung nach einem der vorhergehenden Ansprüche, **dadurch gekennzeichnet, dass** der Strömungsquerschnitt der Injektionsdüse (5) veränderbar ist.

4. Vorrichtung nach einem der vorhergehenden Ansprüche, **dadurch gekennzeichnet, dass** - in Laufrichtung des Produkts gesehen - vor der Injektionsdüse (5) ein Vorkühlabschnitt (4) vorgesehen ist, in den zwecks Vorkühlung des Produkts ein Kältemittel zuführbar ist.

5. Vorrichtung nach Anspruch 5, **dadurch gekennzeichnet, dass** der Nachkühlabschnitt (6) über eine Gasleitung mit dem Vorkühlabschnitt (4) in Strömungsverbindung steht, um Kältemittel aus dem Nachkühlabschnitt (6) in den Vorkühlabschnitt (4) zuzuführen.

6. Vorrichtung nach Anspruch 6, **dadurch gekennzeichnet, dass** eine auf den Produkteingang (3) des Kühltunnels (2) gerichtete Vorkühldüse (27) vorgesehen ist.

7. Vorrichtung nach einem der vorhergehenden Ansprüche, **dadurch gekennzeichnet, dass** die Längsachse (25) des Kühltunnels (2) senkrecht, waagerecht oder in einem Winkel zur Senkrechten geneigt angeordnet ist.

8. Vorrichtung nach einem der vorhergehenden Ansprüche, **gekennzeichnet durch** einen modularen Aufbau, bei dem der Vorkühlabschnitt (4), die Injektionsdüse (5) und/oder der Nachkühlabschnitt (6) lösbar miteinander verbunden und/oder der Vorkühlabschnitt (4) und/oder der Nachkühlabschnitt (6) aus mehreren lösbar miteinander verbundenen Teilabschnitten (19a, 19b, 19c) zusammengesetzt sind.

9. Vorrichtung nach einem der vorhergehenden Ansprüche, **dadurch gekennzeichnet, dass** der Kühltunnel (2) eine Abfolge von mehreren Injektionsdüsen (5) mit sich daran jeweils anschließenden Nachkühlabschnitten (6) umfasst.

10. Verfahren zum Kühlen oder Frosten langgestreckter Produkte, bei dem das Produkt in Längsrichtung kontinuierlich durch einen rohrförmigen Kühltunnel (2) transportiert und dabei an einer Injektionsdüse (5), die einen sich zumindest über einen wesentlichen Teil des Innenumfangs des Kühltunnels (2) erstreckenden Ringspalt (12) umfasst, über zumindest annähernd seinen gesamten Außenumfang mit einem kryogenen Kältemittel beaufschlagt und anschließend in einem Nachkühlabschnitt (6) des Kühltunnels durch eine Atmosphäre geführt wird, deren Temperatur über der Temperatur des kryogenen Kältemittels bei der Beaufschlagung an der Injektionsdüse (5) liegt.

11. Verfahren nach Anspruch 10, **dadurch gekennzeichnet, dass** das Produkt vor Erreichen der Injektionsdüse (5) einen Vorkühlabschnitt (4) durchläuft, in dem zwecks Vorkühlung des Produkts eine kalte gasförmige Atmosphäre aufrecht erhalten wird.

12. Verfahren nach Anspruch 10 oder 11, **dadurch gekennzeichnet, dass** das kryogene Kältemittel an der Injektionsdüse (5) in verflüssigtem Zustand auf das Produkt aufgetragen wird und beim Transport durch den Nachkühlabschnitt (6) durch den Kontakt mit dem Produkt zumindest im Wesentlichen verdampft und dadurch eine kalte Atmosphäre im Nachkühlabschnitt (6) ausbildet.

13. Verfahren nach Anspruch 12, **dadurch gekennzeichnet, dass** das im Nachkühlabschnitt (6) verdampfte Kältemittel zumindest teilweise zum Vorkühlabschnitt (4) geleitet und dort zum Vorkühlen des Produkts eingesetzt wird.

14. Verfahren nach einem der Ansprüche 10 bis 13, **dadurch gekennzeichnet, dass** als Kältemittel ein verflüssigtes oder tiefkalt gasförmiges kryogenes Medium, beispielsweise Stickstoff, Sauerstoff, Argon oder Kohlendioxid zum Einsatz kommt.

## Claims

1. Device for cooling or freezing elongated products, comprising a tubular cooling tunnel (2) which, during use of the device, is traversed by the product in the longitudinal direction and in which
- as seen in the travelling direction of the product - an injection nozzle (5) and a tubular secondary cooling portion (6) are arranged in succession, wherein the injection nozzle (5) is formed such that the product can be subjected to a cryogenic refrigerant over at least approximately the entire outer circumference thereof, and an atmosphere consisting at least predominantly of cold cryogenic refrigerant is maintained in the secondary cooling portion (6) during operation of the device,
**characterized**
**in that** the injection nozzle (5) comprises an annular gap (12) which extends at least over a significant part of the inner circumference of the cooling tunnel (2).

2. Device according to Claim 1, **characterized in that** the injection nozzle (5) comprises a plurality of nozzle openings arranged at identical angular distances around the inner circumference of the cooling tunnel (2).

3. Device according to either of the preceding claims, **characterized in that** the flow cross section of the injection nozzle (5) is variable.

4. Device according to one of the preceding claims, **characterized in that** a precooling portion (4), into which a refrigerant can be fed for the purpose of precooling the product, is provided upstream of the injection nozzle (5) - as seen in the travelling direction of the product.

5. Device according to Claim 4, **characterized in that** the secondary cooling portion (6) is fluidically connected to the precooling portion (4) via a gas line in order to feed refrigerant from the secondary cooling portion (6) into the precooling portion (4).

6. Device according to Claim 5, **characterized in that** provision is made of a precooling nozzle (27) directed to the product inlet (3) of the cooling tunnel (2).

7. Device according to one of the preceding claims, **characterized in that** the longitudinal axis (25) of the cooling tunnel (2) is arranged vertically, horizontally or inclined at an angle in relation to the vertical.

8. Device according to one of the preceding claims, **characterized by** a modular structure, in which the precooling portion (4), the injection nozzle (5) and/or the secondary cooling portion (6) are detachably connected to one another and/or the precooling portion (4) and/or the secondary cooling portion (6) are composed of a plurality of partial portions (19a, 19b, 19c) which are detachably connected to one another.

9. Device according to one of the preceding claims, **characterized in that** the cooling tunnel (2) comprises a sequence of a plurality of injection nozzles (5) each with adjoining secondary cooling portions (6).

10. Method for cooling or freezing elongated products, in which the product is transported continuously in the longitudinal direction through a tubular cooling tunnel (2) and in the process is subjected to a cryogenic refrigerant over at least approximately the entire outer circumference thereof at an injection nozzle (5), which comprises an annular gap (12) which extends at least over a significant part of the inner circumference of the cooling tunnel (2), and then in a secondary cooling portion (6) of the cooling tunnel is guided through an atmosphere, the temperature of which lies above the temperature of the cryogenic refrigerant when it is applied at the injection nozzle (5).

11. Method according to Claim 10, **characterized in that**, before it reaches the injection nozzle (5), the product traverses a precooling portion (4), in which a cold gaseous atmosphere is maintained for the purpose of precooling the product.

12. Method according to Claim 10 or 11, **characterized in that** the cryogenic refrigerant is applied to the product in the liquefied state at the injection nozzle (5) and, as it is being transported through the secondary cooling portion (6), at least substantially evaporates through the contact with the product, and thereby forms a cold atmosphere in the secondary cooling portion (6).

13. Method according to Claim 12, **characterized in that** the refrigerant evaporated in the secondary cooling portion (6) is conducted at least partially to the precooling portion (4), where it is used to precool the product.

14. Method according to one of Claims 10 to 13, **characterized in that** the refrigerant used is a liquefied or cryogenically gaseous, cryogenic medium, for example nitrogen, oxygen, argon or carbon dioxide.

## Revendications

1. Dispositif de refroidissement ou de gel de produits allongés, avec un tunnel de refroidissement tubulaire (2) qui, lors de l'utilisation du dispositif, est parcouru par le produit en direction longitudinale et dans lequel - considéré dans la direction de déplacement du produit - sont disposées l'une derrière l'autre une buse d'injection (5) et une section de post-refroidissement tubulaire (6), dans lequel la buse d'injection (5) est configurée de telle manière que le produit puisse être exposé à un agent de refroidissement cryogénique sur au moins approximativement toute sa périphérie extérieure, et une atmosphère constituée au moins principalement d'agent de refroidissement cryogénique est maintenue dans la section de post-refroidissement (6) pendant le fonctionnement du dispositif, **caractérisé en ce que** la buse d'injection (5) comprend une fente annulaire (12) s'étendant au moins sur une partie essentielle de la périphérie intérieure du tunnel de refroidissement (2).

2. Dispositif selon la revendication 1, **caractérisé en ce que** la buse d'injection (5) comprend une pluralité d'orifices de buse disposés à des distances angulaires égales autour de la périphérie intérieure du tunnel de refroidissement (2).

3. Dispositif selon l'une quelconque des revendications précédentes, **caractérisé en ce que** la section mouillée de la buse d'injection (5) peut être modifiée.

4. Dispositif selon l'une quelconque des revendications précédentes, **caractérisé en ce que** - considérée dans la direction de déplacement du produit - il est prévu avant la buse d'injection (5) une section de pré-refroidissement (4), dans laquelle un agent de refroidissement peut être introduit en vue d'un pré-refroidissement du produit.

5. Dispositif selon la revendication 4, **caractérisé en ce que** la section de post-refroidissement (6) est en communication d'écoulement avec la section de pré-refroidissement (4) par une conduite de gaz, afin d'introduire l'agent de refroidissement de la section de post-refroidissement (6) dans la section de pré-refroidissement (4).

6. Dispositif selon la revendication 5, **caractérisé en ce qu'**il est prévu une buse de pré-refroidissement (27) dirigée vers l'entrée de produit (3) du tunnel de refroidissement (2).

7. Dispositif selon l'une quelconque des revendications précédentes, **caractérisé en ce que** l'axe longitudinal (25) du tunnel de refroidissement (2) est disposé verticalement, horizontalement ou avec une inclinaison d'un certain angle par rapport à la verticale.

8. Dispositif selon l'une quelconque des revendications précédentes, **caractérisé par** une construction modulaire, dans laquelle la section de pré-refroidissement (4), la buse d'injection (5) et/ou la section de post-refroidissement (6) sont assemblées les unes aux autres de manière amovible et/ou la section de pré-refroidissement (4) et/ou la section de post-refroidissement (6) sont composées de plusieurs sections partielles (19a, 19b, 19c) reliées les unes aux autres de manière amovible.

9. Dispositif selon l'une quelconque des revendications précédentes, **caractérisé en ce que** le tunnel de refroidissement (2) comprend une succession de plusieurs buses d'injection (5) avec des sections de post-refroidissement (6) s'y raccordant respectivement.

10. Procédé de refroidissement ou de gel de produits allongés, dans lequel on transporte le produit en direction longitudinale à travers un tunnel de refroidissement tubulaire (2) et on l'y expose à un agent de refroidissement cryogénique sur au moins approximativement toute sa périphérie extérieure à une buse d'injection (5), qui comprend une fente annulaire (12) s'étendant au moins sur une partie essentielle de la périphérie intérieure du tunnel de refroidissement (2), et on le conduit ensuite dans une section de post-refroidissement (6) du tunnel de refroidissement à travers une atmosphère, dont la température est supérieure à la température de l'agent de refroidissement cryogénique lors de l'exposition à la buse d'injection (5).

11. Procédé selon la revendication 10, **caractérisé en ce que**, avant d'atteindre la buse d'injection (5), le produit parcourt une section de pré-refroidissement (4), dans laquelle on maintient une atmosphère gazeuse froide en vue d'un pré-refroidissement du produit.

12. Procédé selon la revendication 10 ou 11, **caractérisé en ce que** l'on dépose l'agent de refroidissement cryogénique sur le produit à la buse d'injection (5) à l'état liquéfié et on le vaporise au moins essentiellement par le contact avec le produit pendant le transport à travers la section de post-refroidissement (6), créant ainsi une atmosphère froide dans la section de post-refroidissement (6).

13. Procédé selon la revendication 12, **caractérisé en ce que** l'on conduit l'agent de refroidissement vaporisé dans la section de post-refroidissement (6) au moins en partie dans la section de pré-refroidissement (4) et on l'y utilise pour le pré-refroidissement du produit.

14. Procédé selon l'une quelconque des revendications 10 à 13, **caractérisé en ce que** l'on utilise comme agent de refroidissement un fluide cryogénique liquéfié ou gazeux frigorifique, par exemple l'azote, l'oxygène, l'argon ou le dioxyde de carbone.
